# EUROPÄISCHE PATENTSCHRIFT

(11) **EP 2 020 018 B1**
(45) Veröffentlichungstag und Bekanntmachung des Hinweises auf die Patenterteilung: **02.12.2009**
(21) Anmeldenummer: 07729105.2
(22) Anmeldetag: 14.05.2007
(51) Int. Cl.: H01J 61/36, H01J 61/82, C04B 37/00

(54) **HOCHDRUCKENTLADUNGSLAMPE**
HIGH-PRESSURE DISCHARGE LAMP
LAMPE À DÉCHARGE À HAUTE PRESSION

(30) Priorität: 23.05.2006 DE 102006024238
(43) Veröffentlichungstag der Anmeldung: 04.02.2009
(73) Patentinhaber: Osram Gesellschaft mit beschränkter Haftung, 81543 München (DE)
(72) Erfinder: BRAUN, Paul, 86405 Meitingen (DE); HÜTTINGER, Roland, 86916 Kaufering (DE); STOCKWALD, Klaus, 82110 Germering (DE)
(86) Internationale Anmeldenummer: PCT/EP2007/054653
(87) Internationale Veröffentlichungsnummer: WO 2007/135012

(56) Entgegenhaltungen:
- JP-A- 10 134 768
- JP-A- 11 096 973
- JP-A- 11 162 411
- US-A1- 2006 008 677
- US-B2- 6 882 109

## Beschreibung

### Technisches Gebiet

Die Erfindung geht aus von einer Hochdruckentladungslampe gemäß dem Oberbegriff des Anspruchs 1. Derartige Lampen sind insbesondere Hochdruckentladungslampen mit keramischen Entladungsgefäß für die Allgemeinbeleuchtung.

### Stand der Technik

Die US-A 6 012 303 offenbart ein Glaslot auf Al₂O₃-Y₂O₃ - Basis zur Verbindung von keramischen Bauteilen.

Aus der US-A 6 774 547 ist eine Durchführung für keramische Entladungsgefäße bekannt, bei der mehrere Stränge aus dünnem Draht verwendet werden. Dabei sind die Drähte durchgehend aus Mo oder W gefertigt.

### Darstellung der Erfindung

Die Aufgabe der vorliegenden Erfindung ist es, eine Hochdruckentladungslampe bereitzustellen, die eine möglichst lange Lebensdauer erreicht. Eine weitere Aufgabe ist es, eine Methode anzugeben, welche es erlaubt spaltfreie hochdruckfeste langzeitstabile und chemisch stabile Hochdrucklampen-Verschlüsse herzustellen, die im Wesentlichen die Kapillare vollständig in Geometriebereichen ausfüllen, welche bei Betriebsbedingungen Temperaturen T von typisch T ≥ 850°C erreichen. Dadurch wird eine vergleichbare Lebensdauer erzielt wie bei bisherigen deutlich spaltbehafteten (≥ 20 µm) Konstruktionen, welche im hermetischen Verschlussbereich typisch eine Temperatur von < 850°C erreichen.

Hierdurch werden verschiedene Vorteile tragend, die zu einer wesentlichen Verbesserung des Lampenverhaltens, der Lebensdauer, der Stabilität und der Variationsbreite der Lampenleistung führen.

Diese Aufgabe wird gelöst durch die kennzeichnenden Merkmale des Anspruchs 1.

Besonders vorteilhafte Ausgestaltungen finden sich in den abhängigen Ansprüchen.

Im einzelnen handelt es sich um Hochdruckentladungslampen mit einem keramischen Entladungsgefäß mit einem zentralen Teil und zwei Endbereichen, die jeweils durch Abdichtungsteile verschlossen ist, wobei Elektroden in den Abdichtungsteilen verankert sind, die sich in das vom Entladungsgefäß umhüllte Entladungsvolumen erstrecken, wobei eine Halogen-haltige Füllung, die insbesondere Metallhalogenide oder Halogene enthält, im Entladungsvolumen untergebracht ist. Im Bereich der Abdichtungsteile sind die folgenden Komponenten enthalten:
- eine elektrische Durchführung, die die Elektrode haltert, und die im vorderen Teil aus Wolfram und im hinteren Teil aus Niob oder ähnlichem Material besteht und die in einem Stützteil aus Al₂O₃-haltiger Keramik, bevorzugt PCA, eingebracht ist;
- der vordere W-Teil ist ein Draht mit einem Durchmesser DUW von maximal 350 µm, bevorzugt maximal 250 µm;
- das Abdichtungsteil hat eine Gesamtlänge zwischen 2 und 8 mm;
- der vordere W-Teil ist mindestens über eine Länge LW von 1 mm in dem Abdichtungsteil aufgenommen;
- das Aspektverhältnis LW/DUW, gebildet aus der Länge des W-Teil und dem Durchmesser des W-Teils, ist mindestens 10, bevorzugt 15 bis 20;
- das für das Abdichtungsteil verwendete Glaslot ist dem System Nb-Keramik angepasst und besteht aus einer Mischung von mindestens zwei Oxiden, nämlich Al₂O₃ in einem Anteil von 30 bis 90 mol-%, bevorzugt mindestens 60 mol-%. Der Rest , im folgenden als SE-Anteil bezeichnet, ist mindestens ein Oxid der Seltenen Erden Yttrium Y, Neodym Nd, Thulium Tm, Dysprosium Dy. Der Begriff Glaslot umfasst feinkristalline und auch amorphe Erstarrungsstrukturen, also auch Material, das häufig als Schmelzkeramik bezeichnet wird.

Außerdem kann das Lot Zugaben, bevorzugt bis zu 10 mol-%, an mindestens einem weiteren Oxid aus der Gruppe MgO, Ho2O3 und Ce2O3 enthalten, um eine verbesserte Anpassung der Einschmelztemperatur und eine bessere Beständigkeit des Lots gegen Bestandteile der Füllung zu erreichen. Dieser Anteil ist dem SE-Anteil zuzurechnen und schmälert nicht den Anteil des Al₂O₃. Der Anteil an SiO2 sollte möglichst gering, bevorzugt Null sein.

Das Niob-ähnliche Material meint ein Material, das einen ähnlichen thermischen Ausdehnungskoeffizienten wie Niob besitzt, also beispielsweise Tantal oder eine Legierung aus Tantal und Niob oder eine geeignet eingestellte Legierung aus Molybdän und Vanadium. Insbesondere sollte der thermischen Ausdehnungskoeffizient weniger als 10 % von dem des Nb abweichen.

Bevorzugt umfasst das Abdichtungsteil ein keramisches kurzes Kapillarrohr, wobei die Durchführung im Kapillarrohr enthalten ist. Dabei wird bevorzugt das Kapillarrohr im Endteil und die Durchführung im Kapillarrohr mit dem gleichen Glaslot in den Spalten zwischen diesen Teilen abgedichtet, was die Herstellung vereinfacht. Dies ist allerdings erstaunlich, weil zwischen Metall und Keramik ein Gleitverbindung erzeugt wird, also eine duktile Druckverbindung. Bisher wurden für diesen Zweck eher metallische Lote bevorzugt. Dagegen verbinden sich zwei Keramische Bauteile über eine spezielle verzahnte Grenzfläche. Das oben angeführte Glaslot kann überraschenderweise beide Verbindungsarten zufriedenstellend bewerkstelligen. Der Endbereich kann ein separater Stopfen oder ein integral am Entladungsvolumen sitzendes Endstück sein.

Es hat sich experimentell gezeigt, dass die Abdichtung dann eine besonders hohe Lebensdauer erreicht, wenn die gesamte radiale Einschmelzlänge REL des Glaslots kleiner als 70 µm ist, und vor allem, wenn bevorzugt REL ≤ 50 µm ist. Damit ist sowohl die einfache Spaltbreite beim Spalt zwischen Keramik und Metall als auch diejenige beim Spalt zwischen den beiden Keramik-Teilen gemeint.

Vorteilhaft ist es, wenn das Glaslot eine eutektische Mischung der beteiligten Oxide ist, da dann ein besonders niedriger Schmelzpunkt der Mischung erreicht wird.

Um auch bei den gewünschten dünnen Drähten hohe Stromlasten tragen zu können, ist es vorteilhaft, wenn die Durchführung aus mehreren Strängen besteht.

In einer besonders bevorzugten Ausführungsform läuft das Endstück konisch in Richtung zur Elektrode hin zu. Damit wird automatisch sichergestellt, dass das darin enthaltene Kapillarrohr einen Anschlag findet, der sonst beispielsweise durch einen Vorsprung am Endstück realisiert werden muss. Der engste Durchmesser des konischen Endstücks muss also in etwa dem Außendurchmesser des Kapillarrohrs entsprechen oder etwas kleiner sein.

Alternativ kann das Stützteil in einem weiteren Ausführungsbeispiel am äußeren Teil z.B. Anschlagnasen oder äquivalente Ausformungen besitzen um die Positionierung zu gewährleisten. Umgekehrt kann der Endbereich einen Anschlag für das Stützteil besitzen.

Die Erfindung bezieht sich im Detail auf keramische Lampenkonstruktionen, bei welchen Kapillarspaltvolumina im Verschluss-Bereich minimiert werden. Dies erlaubt den Bau von keramischen Hochdrucklampen mit deutlich geringerer Farbstreuung, geringerer Baulänge und insbesondere mit geringeren Füllsubstanzdosierungen, was zur Steigerung der Licht-Ausbeute bei geringerer Umweltbelastung führt. Außerdem können Keramische Hochdruckentladungslampen mit verbessertem Dimm-Verhalten realisiert werden.

In keramischen Hochdruck-Lampen mit keramischen Entladungsgefäßen werden bisher verlängerte Endenformen, sog. Kapillarverschlüsse, verwendet, welche durch Glaslote mit einer Zusammensetzung aus SiO₂-Al2O₃-SE₂O₃ (SE ist eine Seltene Erde wie Dy, Ho, Tm, La etc.) verschlossen werden. diese Kapillaren haben eine typische Länge von 10 bis 25 mm.

Bisher bestehen Durchführungssysteme hauptsächlich aus einer Kombination von Nb-, Mo- und W-Teilen, und ggf. weiteren Teilen aus leitfähigen Cermets, die ebenfalls aus Mo, W und Al2O3 bestehen. Dagegen werden jetzt bei hinreichender Einbettüngslänge des im Thermischen Ausdehnungs-Koeffizienten dem umgebenden keramischen Material angepassten Nb bei Temperaturen im Betrieb von ca. 800-950 °C langzeitstabile, hochdruckfeste und ggü. den flüssigen Metallhalogenid-Mischungen chemisch stabile Endenverschlüsse erzielt. Die Einschmelzlänge des Nb-Teils in der Abdichtung beträgt 5 bis 50 % von LA. Der Witz der vorliegenden Erfindung ist jedoch, dass bei den gewählten Abmessungen nicht nur das Nb zur Abdichtung beiträgt, sondern zu einem wesentlichen Teil auch der hintere entladungsferne Teil des Wolframs. Deshalb ist das Aspektverhältnis ein entscheidender Parameter der vorliegenden Erfindung.

Es zeigt sich im Stand der Technik, dass aufgrund von Kapillarwirkung und unterschiedlichen Benetzungsgrad der Füllung in unterschiedlichen Bereichen der Durchführung Entmischungseffekte und u.U. Verarmungseffekte bestimmter Metallhalogenide (insbesondere bei Nutzung von Ce, Pr und Nd in der Füllung) auftreten, welche zu verstärkten Farbschwankungen und damit verschlechterter Farbkonstanz von Lampengruppen z.B. in einer Beleuchtungsanlage führt. Insbesondere in Entladungsgefäßen, welche Hg-freie Füllungen enthalten, kommt es häufig zu Gasphasentransport-Phänomenen im Bereich der Durchführung und zu Materialumlagerungseffekten, so dass die Lebensdauer der Systeme deutlich ggü. Hg-haltigen Füllungen verringert sind. Beim Dimmen von keramischen Metallhalogenid-Lampen des oben .genannten Standes der Technik wirken die Kapillaren als Kühlfallen für die schwerflüchtigen Metallhalogenidanteile der Füllung, wodurch deren Dampfdruck deutlich reduziert wird. Dabei leidet die Farbwiedergabe und die Farbstabilität beim gedimmten Betrieb. Daher sollten Kapillaren möglichst vermieden werden.

Die Erfindung basiert auf der Maßnahme, ein keramisches Entladungsgefäß mit deutlich gekürzter Durchführungslänge LA von nur noch 2-8 mm zu verwenden, wobei ein starker Temperaturgradient von innen nach außen bewusst in Kauf genommen wird.

Zum Ausfüllen der Durchführungsöffnung am Endbereich wird eine aus mehreren Komponenten bestehende Konstruktion im Wesentlichen aus Nb- und W-Teilen und longitudinal geformtes Vollmaterial, z.B. Röhrchen, bzw. u.U. mit Mulden strukturiertes Stabmaterial aus PCA, verwendet, das über einfache keramische Herstellverfahren wie Extrusion, Schlickerguss oder Spritzguss-Verfahren bereitgestellt werden kann und über Schweißfügeverfahren gefügt werden kann. Es kann im Gegensatz zum Stand der Technik auf weitere Materialien wie Zwischenteile aus Molybdän verzichtet werden.

Die gefügten Durchführungssysteme werden in den Durchführungsöffnungen gehaltert und beim Verschluss mit einem speziellen Glaslot als Einbettmaterial, welches im Wesentlichen frei von SiO2-Zumischungen ist und das im Wesentlichen im thermischen Ausdehnungskoeffizienten der PCA-Keramik und dem Nb angepasst ist, eingebettet. Dabei ist eine typische Schmelztemperatur des Lotes 1700 °C. wesentlich ist, dass diese Schmelztemperatur um wenigstens 150°C kleiner ist als diejenige der umgebenden Keramik. Häufig ist diese aus PCA, also Al₂O₃, dessen Schmelztemperatur bei etwa 2050 °C liegt.

Dieses Einbettmaterial kann aus einer im Temperaturbereich von 1500°C -1900°C aufschmelzbaren Mischung aus einer (u.U. vorgesinterten) Pulver-Stoffmischung von Al₂O₃ und mindestens einem der Oxide Y2O3, Nd203, Tm203, Dy2O3, ggf. unter Zugabe von MgO, mit typisch 30-90 mol-%, bevorzugt mit 60-85 mol-%, Al2O3-Gehalt bestehen und füllt die verbleibenden Spalten bei einer thermischen Prozess-Behandlung vollständig aus.

Es können auch Anteile an Ho2O3, Ce2O3 beigemengt sein, so dass beispielsweise andere Mischungen aus A1203 mit anderen SE2O3 (SE=Seltene Erde) oder insbesondere ternäre Mischungen mit relativ geringen Schmelzpunkten von typisch <1850°C resultieren.

Die Erfindung basiert auf der Erkenntnis, dass die absolute Ausdehnung von Konstruktionsteilen wie Durchführung und Stützelement und Einbettmaterial wie Glaslot innerhalb des Durchführungssystems in gewissen Grenzen hinsichtlich Durchmesser und Länge eingestellt werden müssen um eine langzeitstabile hermetische und korrosionsfeste Durchführung bereitzustellen. Dadurch ergibt sich beim Spannungsaufbau im Einbettmaterial beim wiederholten Durchlaufen thermischer Aufheiz- und Abkühlungszyklen beim Lampenbetrieb durch die absolute Ausdehnung der im thermischen Ausdehnungskoeffizienten unterschiedlichen Materialien nur eine gut beherrschbare unterkritische Spaltbildung im vorderen Teil der Abdichtung zwischen W-Teil und Glaslot, während im thermisch weniger stark belasteten Teil der Abdichtung trotzdem auch schon zwischen W-Teil und Glaslot eine hermetische Abdichtung erzielt wird. Wesentlich ist also, dass nicht nur der Nb-Teil, sondern auch ein erheblicher Anteil des W-Teils, axial gesehen, zur Abdichtungslänge beiträgt.

Ein wichtiger Aspekt ist die Wahl der absoluten Abmessungen der Einschmelzöffnung und der Füllanteile im Glaslot sowie die Einstellung der Breite REL der verbleibenden Spalten, die mit dem speziellen Hochtemperatur-Einbettmaterial während eines thermischen Prozessschrittes gefüllt werden. Im Prinzip kann der innere und äußere Spalt mit unterschiedlichen Loten befüllt sein, bevorzugt aber mit dem gleichen Glaslot.

So zeigt sich, dass die Drahtstärke DUN und DUW der eingebetteten Nb-und W- Drähte im Bereich ≤ 0.35 mm, bevorzugt ≤ 0.25 mm, liegen soll. Die vom Einbettmaterial ausgefüllte Spaltenbreite REL, beispielsweise zwischen metallischen Elementen und keramischen Elementen sollte sein: REL ≤ 70 µm und bevorzugt REL ≤ 50µm. Das Stützelement sollte zumindest zu 50 mol-% aus Al2O3 bestehen, bevorzugt mehr als 65 %. Geeignet ist PCA als keramisches Material , evtl. dotiert wie an sich bekannt.

Im Bereich der Einbettung des W-Teils sollte die W-Drahtlänge LW mindestens 1 mm, insbesondere etwa 2 mm bei größeren Draht-Durchmessern DUW betragen. Wesentlich ist ein Aspektverhältnis LW/DUW von mindestens 10.

Zur Erhöhung der Stromtragfähigkeit (I_{load_max} [A/mm²]) können Draht-Bündel zur Aufteilung des Strompfades in mehrere stromtragende Stränge n_str verwendet werden. Die Konstruktion der Abdichtung ist daher von außen nach innen folgendermaßen strukturiert:

Die longitudinale Ausdehnung der Einbettung kann 2-8 mm betragen und orientiert sich im wesentlichen an LA, der eingebetteten Länge des Stützelements.

Von außen wird in die Durchführungsöffnung ein Nb-Stift/Stiftbündel über 5 bis maximal 50% der Länge LA des Stützelements eingeführt. Bei Bündeln ist der Zwischenraum mit Al2O3 als dichtgesintertes oder vorgesintertes Material gefüllt (bev. als Formkörper in Gestalt eines Kapillarrohrs), im Fall von Nb-Einzeldraht z.B. als PCA-Rohr. An diese Stromzuführung ist stumpf ein W-Draht bzw. ein Drahtbündel ungefähr gleichen Durchmessers angeschweißt. Dafür können verschiedene Fügemethoden verwendet.

An den W-Draht bzw. das Drahtbündel wird die W-Elektrode bevorzugt über Laserschweißung angeschweißt, derart dass das Gesamtsystem durch die offene Durchführungsöffnung des Endbereichs passt und der Elektrodenstift vollständig in den Brennerraum einragt. Falls der Elektrodenstift-Durchmesser größer ist als die festgelegten Drahtstärken für die Einbettung, muss der Stift vollständig außerhalb des durch Einbett-Material auszufüllenden Volumens positioniert sein. der Elektrodenstift muss dann durch einen Draht mit den Regeln entsprechender Stärke in Verbindung zum durch Einbett-Material ausgefüllten Bereich in mechanischer Verbindung stehen.

Nach Positionierung des Durchführungs-Systems wird dieses durch Aufschmelzen eines Glaslots, insbesondere eines Al₂O₃ / Y₂O₃-Gemisches, eingebettet, derart, dass die Spalten annähernd vollständig ausgefüllt sind und somit Toträume in den Kapillaren gegenüber Innen- und Außenraum der Kapillare vollständig verschlossen sind. Dadurch wird ein inniger Wärmekontakt zwischen den eingebetteten Teilen und der umgebenden Keramik, die mit dem Brennerende in direktem Kontakt ist, erzeugt und aufrechterhalten. Das Einbettmaterial ist gegenüber Reaktionen mit der flüssigen Metallhalogenid-Schmelze im Lampenbetrieb extrem träge und erlaubt eine Standzeit über mehrere tausend Schaltzyklen und Gesamt-Lebensdaüern bis zu 25 000 h. Dieses Prinzip gilt nicht nur für Metallhalogenide, sondern auch für Füllungen, die reines Halogen als aggressiven Füllstoff einsetzen. Es kann aber auch bei anderen aggressiven Füllstopfen wie beispielsweise dem Natrium einer Natriumhochdrucklampe angewendet werden.

### Kurze Beschreibung der Zeichnungen

Im Folgenden soll die Erfindung anhand mehrerer Ausführungsbeispiele näher erläutert werden. Die Figuren zeigen:
- Fig. 1: eine Hochdruckentladungslampe;
- Fig. 2: ein Detail der Entladungslampe aus Figur 1;
- Fig. 3 bis 8: weitere Ausführungsbeispiele eines Entla- dungsgefäßes.

### Bevorzugte Ausführungsform der Erfindung

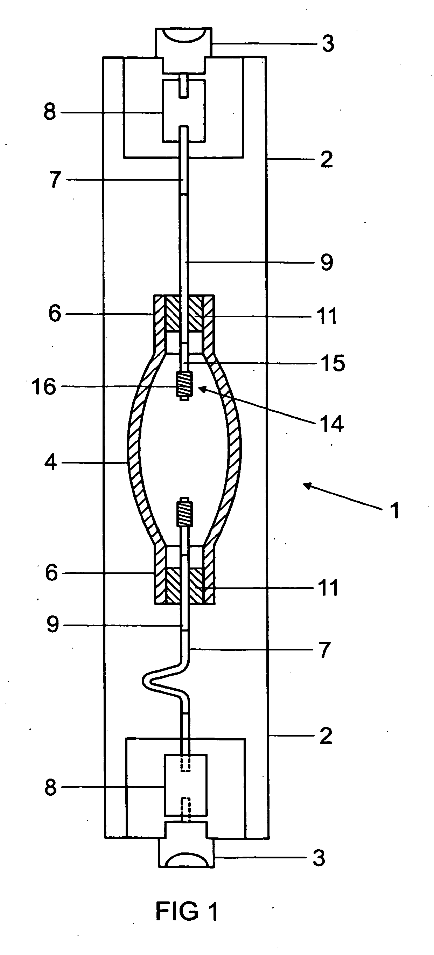

In Figur 1 ist schematisch eine Metallhalogenidlampe mit einer Leistung von 150 W dargestellt. Sie besteht aus einem eine Lampenachse definierenden zylindrischen Außenkolben 1 aus Quarzglas, der zweiseitig gequetscht (2) und gesockelt (3) ist. Das axial angeordnete Entladungsgefäß 4 aus Al₂O₃-Keramik ist in der Mitte ausgebaucht und besitzt zwei zylindrische Enden 6. Es ist mittels zweier Stromzuführungen 7, die mit den Sockelteilen 3 über Folien 8 verbunden sind, im Außenkolben 1 gehaltert. Die Stromzuführungen 7 sind mit Durchführungen 9 verschweißt, die jeweils in einem Stützteil 11 am Ende 6 des Entladungsgefäßes eingepasst sind.

Beide Durchführungen 9 stehen außen am Stützteil 11 über und haltern entladungsseitig Elektroden 14, bestehend aus einem Elektrodenschaft 15 aus Wolfram und einer am entladungsseitigen Ende aufgeschobenen Wendel 16. Die Durchführung 9 ist jeweils mit dem Elektrodenschaft 15 sowie mit der äußeren Stromzuführung 7 stumpf verschweißt.

Die Füllung des Entladungsgefäßes besteht neben einem inerten Zündgas, z.B. Argon, aus Quecksilber und Zusätzen an Metallhalogeniden. Möglich ist beispielsweise auch die Verwendung einer Metallhalogenid-Füllung ohne Quecksilber, wobei für das Zündgas Xenon ein hoher Druck gewählt wird.

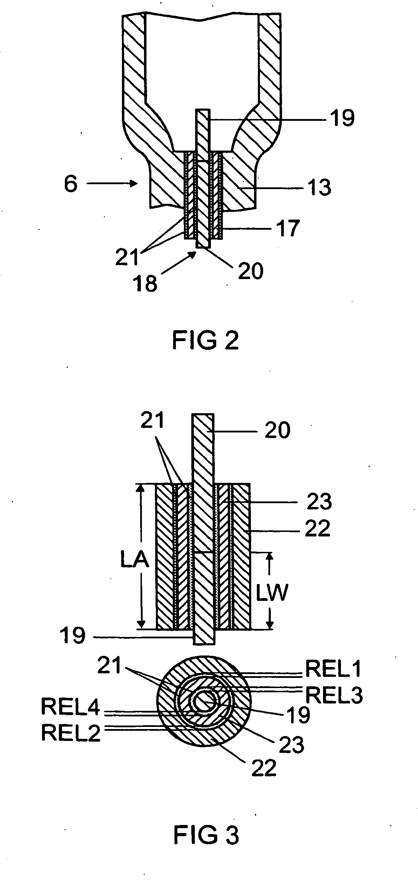

Figur 2 zeigt ein Detail eines Endbereichs 6. Das Abdichtungssystem besteht aus einem am Entladungsgefäß integral angesetzten Endstück 13, in dessen zentraler Bohrung ein kurzes Kapillarrohr 17 von maximal 8 mm Länge LA sitzt. In diesem sitzt zentral die Durchführung 18, deren vorderes der Entladung zugewandetes Teil 19 aus W und deren hinteres von der Entladung abgewandetes Teil 20 aus Niob besteht. Bevorzugt haben beide Teile den gleichen Durchmesser von etwa 200 µm. Sie sind stumpf miteinander verschweißt. Die Durchführung ist im Kapillarrohr und das Kapillarrohr im Endstück mit einem Glaslot 21 abgedichtet, das die gesamte Länge des Spalts ausfüllt.

Figur 3 zeigt ein separates Endstück 22 mit darin enthaltenem Kapillarrohr 23. Dabei ist die Länge LW des W-Teils sowie die gesamte Länge LA der Kapillare 23 angegeben. Die Länge des Kapillarrohrs ist maßgebend, da die zuverlässige Abdichtung zwischen Durchführung und Kapillarrohr die entscheidende Größe ist. Figur 3 zeigt außerdem, wie sich beim Glaslot 21 die radiale Länge REL der Einschmelzung auf vier Spalte mit den Spaltbreiten REL1 bis REL4 bezieht, nämlich den beiden Teillängen der Abdichtung zwischen Endstück und Kapillarrohr REL1 und REL 2 und den beiden Teillängen der Abdichtung zwischen Kapillarrohr und Durchführung REL3 und REL4. Dabei ist natürlich im Idealfall REL1=REL2=REL 3=REL4. Alle Spalte sollten höchstens 70 µm breit sein, wenn möglich höchstens 50 µm.

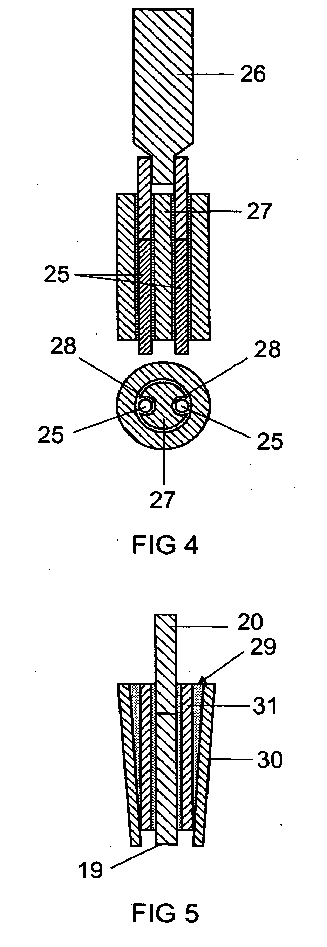

Figur 4 zeigt ein weiteres Ausführungsbeispiel, bei dem die Durchführung aus zwei Drähten, den Adern 25 besteht, die außen mit einer gemeinsamen Basis 26 verbunden sind. Das Stützelement 27 ist hier so geformt, dass es massiv ist und außenliegende Buchten 28 besitzt, die die einzelnen Adern 25 der Durchführung aufnehmen können. Aber auch hier ist ein aus vier Teillängen bestehende Glaslotstrecke REL 1 bis REL 4 maßgeblich, hier gesehen in der Verbindungsachse der Adern.

Figur 5 zeigt ein Ausführungsbeispiel, bei dem das Endstück 30 konisch so weit zuläuft, dass automatisch ein Anschlag für das darin befindliche Kapillarrohr 31 entsteht. Die radiale Länge wird hier gemessen am äußeren Ende 29 der Einschmelzlänge, also dort, wo sie ihren maximalen Wert erreicht.

In der folgenden Tabelle 1 sind mehrere Ausführungsbeispiele für die Abmessungen bei verschiedenen Leistungsstufen gezeigt.

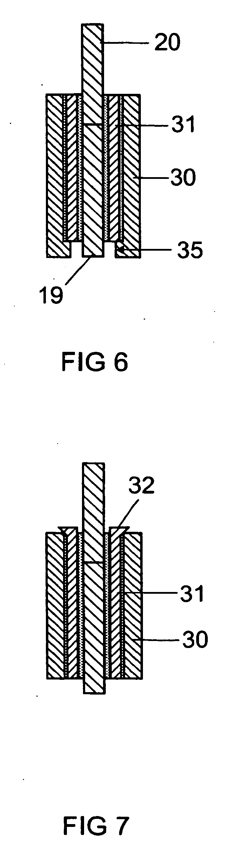

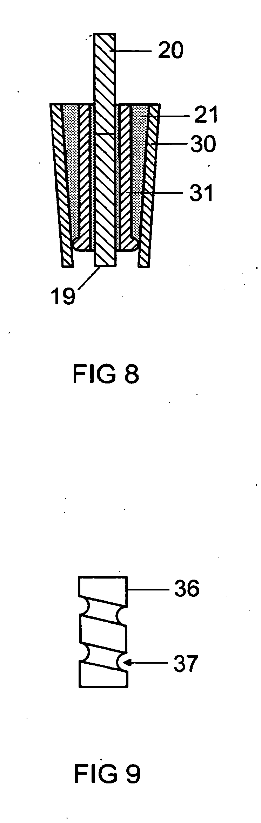

Figur 6, 7 und 8 zeigt jeweils ein Ausführungsbeispiel mit Anschlag. In Figur 6 ist ein in radialer Richtung nach innen zeigender umlaufender Rand 35 am Endteil 30 an dessen entladungszugewandtem Ende angebracht, auf dem das Stützteil 31 aufliegt. In Figur 7 hat das Stützteil 31 selbst an seinem entladungsabgewandten Ende mehrere radial nach außen zeigende, über den Umfang verteilte Zapfen 32, die als Anschlag am äußeren Ende des Endteils 30 dienen. In Figur 8 hat das Stützteil 31 am der Entladung zugewandten Ende eine nach außen gerichtete Verdickung 34. diese dient als seitlicher Anschlag gegen das konisch zulaufende Endstück 30.

Als Füllung eignen sich nicht nur Mischungen von Metallhalogeniden mit oder ohne Quecksilber, sondern beispielsweise auch Hochdruckentladungslampen für fotooptische Zwecke, die Quecksilber und Halogene, meist Brom, enthalten. Diese sind besonders für Videoprojekion geeignet. Das Quecksilber kann dabei auch durch reines Xenon unter sehr hohem druck, mehr als 50 bar, ersetzt sein. In einer weiteren Ausführungsform wird Zn neben anderen Halogeniden verwendet, wie beispielsweise in US 6 853 140 beschrieben, dort als ZnJ2.

Statt achsparalleler Mulden kann beim Stützteil 36, wie Figur 9 zeigt, eine oder mehrere helikal gewundene Kerbe 37 verwendet werden, in denen die Durchführung (nicht gezeigt) als Draht oder als eine von mehreren Adern geführt wird. Damit wird die Dichtstrecke für die Durchführung verlängert. Natürlich sind auch andere, die Weglänge der Mulden verlängernde Konstruktionen geeignet.

**Tabelle 1 von Ausführungsbeispielen für verschiedene Leistungsklassen**

| System-Leistung | LW | LN | LA | T% | Nb% | DUN/DUW | LW/DUW | n_str | SD | ID-filler | OD-filler | REL 1+2 | REL 3+4 | S-cross_I | Dequisingle |
|---|---|---|---|---|---|---|---|---|---|---|---|---|---|---|---|
| | mm | mm | mm | | | mm | | | mm | mm | mm | mm | mm | mm² | mm |
| | | | | | | | | | | | | | | | |
| <=35-75 | 2 | 2 | 4 | 50 | 50 | 0,2 | 10 | 1 | 0,68 | 0,3 | 0,6 | 0,050 | 0,040 | 0,0314 | 0,2 |
| <25 | 1,5 | 0,75 | 2,3 | 67 | 33 | 0,15 | 10 | 1 | 0,5 | 0,2 | 0,4 | 40,025 | 0,050 | 0,0177 | 0,2 |
| 75-100 | 2,5 | 3,5 | 6 | 42 | 58 | 0,22 | 11,4 | 2 | 0,68 | 0,3 | 0,6 | 0,040 | 0,040 | 0,0760 | 0,3 |
| 100-150 | 2,5 | 3,5 | 6 | 42 | 58 | 0,22 | 11,4 | 3 | 0,68 | 0,3 | 0,6 | 0,040 | 0,040 | 0,1140 | 0,4 |
| 250 | 3 | 3,5 | 6,5 | 46 | 54 | 0,3 | 10 | 6 | 0,95 | 0,38 | 0,87 | 0,040 | 0,040 | 0,4241 | 0,7 |

## Patentansprüche

1. Hochdruckentladungslampe mit einem keramischen Entladungsgefäß mit einem zentralen Teil und zwei rohrartigen Endbereichen, die jeweils durch Abdichtungsteile verschlossen sind, wobei Elektroden in den Abdichtungsteilen verankert sind, die sich in das vom Entladungsgefäß umhüllte Entladungsvolumen erstrecken, wobei eine Füllung, die Halogene, insbesondere Metallhalogenide, enthält, im Entladungsvolumen untergebracht ist, **dadurch gekennzeichnet, dass** in den Abdichtungsteilen jeweils die folgenden Komponenten enthalten sind:
- eine Durchführung, die die Elektrode haltert, und die im vorderen dem Entladungsvolumen Zugwandten Teil aus Wolfram und im hinteren dem Entladungsvolumen abgewandten Teil aus Niob-ähnlichem Material besteht und die in einem keramischen Stützteil eingebracht sind;
- der vordere W-Teil ist ein Draht mit einem Durchmesser DUW von maximal 350 µm, bevorzugt maximal 250 µm;
- das Stützteil hat eine Gesamtlänge LA über die Einbettlänge von 2 bis 8 mm;
- der vordere W-Teil ist mindestens über eine Länge LW von 1 mm in dem Stützteil aufgenommen;
- das Aspektverhältnis LW/DUW, gebildet aus der Länge des W-Teils und dem Durchmesser des W-Teils, ist mindestens 10;
- zur Abdichtung wird jeweils Glaslot in den Spalt zwischen Endbereich und Stützteil und in den Spalt zwischen Stützteil und Durchführung eingebracht, wobei jedes Glaslöt aus einer Mischung von mindestens zwei Oxiden besteht, nämlich Al₂O₃ 30 bis 90 mol-%, Rest mindestens ein Oxid der Seltene Erden Yttrium Y, Neodym Nd, Thulium Tm, Dysprosium Dy.

2. Hochdruckentladungslampe nach Anspruch 1, **dadurch gekennzeichnet, dass** das Lot Zugaben an mindestens einem weiteren Oxid aus der Gruppe MgO, Ho2O3 und Ce203 enthält.

3. Hochdruckentladungslampe nach Anspruch 1, **dadurch gekennzeichnet, dass** das Stützteil ein Kapillarrohr ist, wobei die Durchführung im Kapillarrohr enthalten ist, oder ein Stab mit Mulden, die insbesondere achsparallel laufen oder helikal gewunden sind.

4. Hochdruckentladungslampe nach Anspruch 3, **dadurch gekennzeichnet, dass** eine einzige Glaslotsorte verwendet wird.

5. Hochdruckentladungslampe nach Anspruch 1, **dadurch gekennzeichnet, dass** die radiale Einschmelzlänge REL des Glaslots kleiner als 70 µm ist, bevorzugt dass REL ≤ 50 µm ist.

6. Hochdruckentladungslampe nach Anspruch 1, **dadurch gekennzeichnet, dass** das Glaslot eine eutektische Mischung der beteiligten Oxide ist.

7. Hochdruckentladungslampe nach Anspruch 1, **dadurch gekennzeichnet, dass** die Durchführung aus mehreren Adern besteht.

8. Hochdruckentladungslampe nach Anspruch 1, **dadurch gekennzeichnet, dass** das Endstück konisch in Richtung zur Elektrode hin zuläuft, wobei sich sein Innendurchmesser soweit verengt, dass das Endstück einen Anschlag für das Stützelement bildet.

9. Hochdruckentladungslampe nach Anspruch 1, **dadurch gekennzeichnet, dass** das Stützelement oder das Endstück Anschlagausformungen zur Positionierung des Stützelements im Endstück besitzt .

## Claims

1. High-pressure discharge lamp with a ceramic discharge vessel with a central part and two tubular end regions, which are each closed by sealing parts, electrodes being anchored in the sealing parts, which electrodes extend into the discharge volume enveloped by the discharge vessel, a fill, which contains halogens, in particular metal halides, being accommodated in the discharge volume, **characterized in that** in each case the following components are contained in the sealing parts:
- a leadthrough, which holds the electrode and which consists of tungsten in the front part facing the discharge volume and of niobium-like material in the rear part facing away from the discharge volume and which is introduced in a ceramic supporting part;
- the front W part is a wire with a diameter DUW of at most 350 µm, preferably at most 250 µm;
- the supporting part has a total length LA over the embedding length of 2 to 8 mm;
- the front W part is accommodated in the supporting part at least over a length LW of 1 mm;
- the aspect ratio LW/DUW, formed from the length of the W part and the diameter of the W part, is at least 10;
- for sealing purposes, in each case glass solder is introduced into the gap between the end region and the supporting part and into the gap between the supporting part and the leadthrough, each glass solder consisting of a mixture of at least two oxides, namely Al₂O₃ of 30 to 90 mol%, with the remainder being at least one oxide of the rare earths yttrium Y, neodymium Nd, thulium Tm, dysprosium Dy.

2. High-pressure discharge lamp according to Claim 1, **characterized in that** the solder contains additives of at least one further oxide from the group consisting of MgO, Ho2O3 and Ce203.

3. High-pressure discharge lamp according to Claim 1, **characterized in that** the supporting part is a capillary tube, the leadthrough being contained in the capillary tube, or a rod with depressions, which in particular run axially parallel or are helically wound.

4. High-pressure discharge lamp according to Claim 3, **characterized in that** a single type of glass solder is used.

5. High-pressure discharge lamp according to Claim 1, **characterized in that** the radial fused-in length REL of the glass solder is less than 70 µm, preferably the REL is ≤ 50 µm.

6. High-pressure discharge lamp according to Claim 1, **characterized in that** the glass solder is a eutectic mixture of the oxides involved.

7. High-pressure discharge lamp according to Claim 1, **characterized in that** the leadthrough comprises a plurality of conductors.

8. High-pressure discharge lamp according to Claim 1, **characterized in that** the end piece tapers conically in the direction towards the electrode, its inner diameter tapering to such an extent that the end piece forms a stop for the supporting element.

9. High-pressure discharge lamp according to Claim 1, **characterized in that** the supporting element or the end piece has shaped-out stop portions for positioning the supporting element in the end piece.

## Revendications

1. Lampe à décharge à haute pression, comprenant une enceinte de décharge en céramique ayant une partie centrale et deux zones d'extrémité tubulaires qui sont fermées respectivement par des parties d'étanchéité, des électrodes étant ancrées dans les parties d'étanchéité qui s'étendent dans le volume de décharge enveloppé par l'enceinte de décharge, un garnissage qui contient des halogènes, notamment des halogénures métalliques, étant logé dans le volume de décharge, **caractérisé en ce que** dans les parties d'étanchéité sont contenues respectivement les éléments suivantes :
- une traversée qui maintient les électrodes et qui est constituée dans la partie avant tournée vers le volume de décharge en tungstène et dans la partie arrière éloignée du volume de décharge en un matériau analogue au niobium et qui est introduite dans une partie d'appui en céramique ;
- la partie avant en W est un fil ayant un diamètre DUW de 350 µm au maximum et de préférence de 250 µm au maximum ;
- la partie d'appui a une longueur LA totale au-dessus de la longueur d'incorporation de 2 à 8 mm ;
- la partie avant en W est reçue dans la partie d'appui sur une longueur LW de 1 mm ;
- le rapport d'aspect LW/DUW formé de la longueur de la partie en W et du diamètre de la partie en W est d'au moins 10 ;
- pour l'étanchéité respectivement une soudure pour du verre est introduite dans l'intervalle entre la zone d'extrémité et la partie d'appui et dans l'intervalle entre la partie d'appui et la traversée, chaque soudure pour du verre étant constituée d'un mélange d'au moins deux oxydes à savoir Al2O3 de 30 à 90 % en mole, le reste au moins un oxyde des terres rares, yttrium Y, néodym Nd, thulium Tm, dysprosium Dy.

2. Lampe à décharge à haute pression suivant la revendication 1, **caractérisée en ce que** la brasure contient des additions d'au moins un autre oxyde choisi dans le groupe MgO, Ho2O et Ce2O3.

3. Lampe à décharge à haute pression suivant la revendication 1, **caractérisée en ce que** la partie d'appui est un tube capillaire, la traversée étant contenue dans le tube capillaire ou est un barreau ayant des cavités qui s'étendent notamment parallèlement à l'axe ou qui sont enroulées hélicoïdalement.

4. Lampe à décharge à haute pression suivant la revendication 3, **caractérisée en ce que** l'on utilise une seule sorte de brasure pour du verre.

5. Lampe à décharge à haute pression suivant la revendication 1, **caractérisée en ce que** la longueur REL radiale de fusion de la brasure pour du verre est plus petite que 70 µm en ayant de préférence REL ≤ à 50 µm.

6. Lampe à décharge à haute pression suivant la revendication 1, **caractérisée en ce que** la brasure pour du verre est un mélange eutectique des oxydes participants.

7. Lampe à décharge à haute pression suivant la revendication 1, **caractérisée en ce que** la traversée est constituée de plusieurs brins.

8. Lampe à décharge à haute pression suivant la revendication 1, **caractérisée en ce que** l'embout pointe coniquement en direction de l'électrode, son diamètre intérieur étant si rétréci que l'embout forme une butée pour l'élément d'appui.

9. Lampe à décharge à haute pression suivant la revendication 1, **caractérisée en ce que** l'élément d'appui ou l'embout ont des conformations de butée pour la mise en position de l'élément d'appui dans l'embout.
